# FASCICULE DE BREVET EUROPEEN

(11) **EP 2 078 839 B1**
(45) Date de publication et mention de la délivrance du brevet: **20.07.2011**
(21) Numéro de dépôt: 09150075.1
(22) Date de dépôt: 06.01.2009
(51) Int. Cl.: F02D 41/02, F01N 11/00

(54) **Strategie de chauffage rapide pour compenser le vieillissement d'un catalyseur d'oxydation d'un moteur diesel**
Strategie der Schnellerhitzung, um die Deaktivierung eines Oxidationskatalysators eines Dieselmotors zu kompensieren
Quick-heating strategy to compensate for the aging of an oxidation catalyst in a diesel engine.

(30) Priorité: 11.01.2008 FR 0850151
(43) Date de publication de la demande: 15.07.2009
(73) Titulaire: PEUGEOT CITROËN AUTOMOBILES S.A., 78140 Vélizy Villacoublay (FR)
(72) Inventeur: Folliot, Pascal, 78280 Guyancourt (FR); Guerin, Stéphane, 92250 La Garenne Colombes (FR); Singer, Arnold, 92400 Courbevoie (FR)
(74) Mandataire: Ménès, Catherine

(56) Documents cités:
- EP-A- 1 167 727
- EP-A- 1 536 120
- US-A1- 2004 000 136

## Description

L'invention concerne les systèmes de dépollution des moteurs Diesel et, plus particulièrement et une stratégie de compensation du vieillissement des catalyseurs d'oxydation utilisés pour cette dépollution.

Ces catalyseurs qui brûlent les hydrocarbures et le monoxyde de carbone contenus dans les gaz d'échappement sont composés d'une céramique imprégnée de matériaux à base de métaux précieux tels que le platine ou le palladium. On comprend que ces produits sont onéreux et qu'il est donc nécessaire de limiter au plus juste les métaux précieux qu'ils utilisent.

La capacité de traitement des polluants par un catalyseur d'oxydation dépend étroitement de sa température de fonctionnement et, en particulier, de la température des gaz d'échappement.

L'un des inconvénients majeur de cette technologie de dépollution est le vieillissement du catalyseur provoqué, d'une part par les températures élevées auxquelles il est donc soumis pour fonctionner et, d'autre part, par les dommages causés par certains éléments contenus dans le carburant et l'huile du moteur, tels que le souffre, le phosphore, le calcium..

Ce vieillissement se caractérise par une diminution plus ou moins importante de l'efficacité du catalyseur au fur et à mesure de l'augmentation de la distance parcourue par le véhicule.

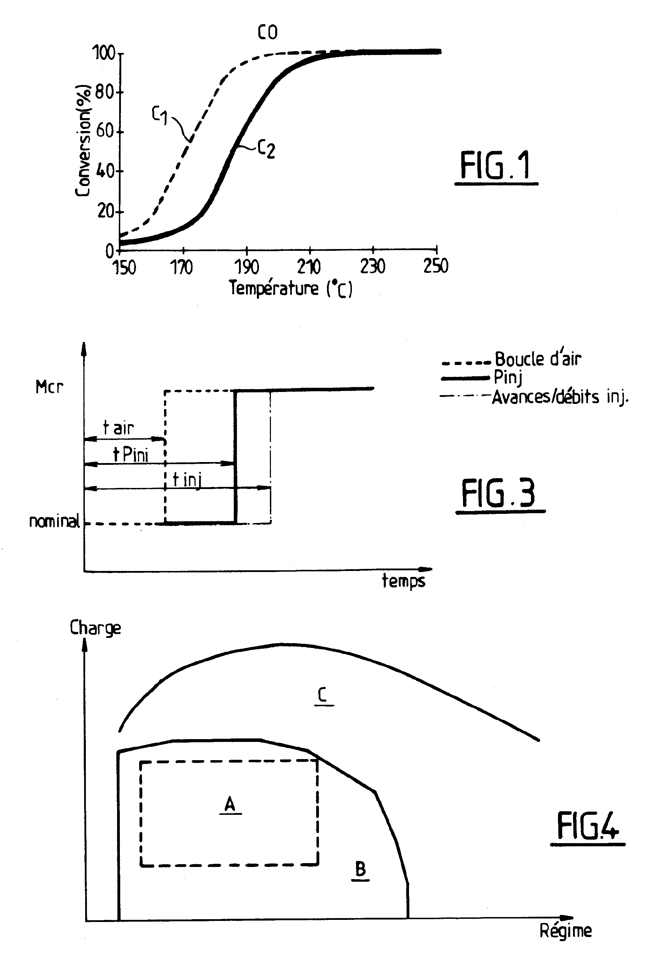

La figure 1 montre une courbe du pourcentage de monoxyde de carbone converti par un catalyseur en fonction de sa température de fonctionnement, pour un catalyseur neuf (C₁) et pour un catalyseur vieilli (C₂).

On constate que l'impact du vieillissement se traduit sur la courbe C₂ par un décalage vers des températures plus élevées. Cela aura pour conséquence des émissions de monoxyde de carbone et d'hydrocarbures plus importantes durant les phases de démarrage du moteur et de montée en température du catalyseur.

L'une des solutions appliquées actuellement pour compenser cette dégradation est d'augmenter la quantité de métaux précieux dans des proportions suffisantes pour assurer jusqu'au terme de la durée de vie normale du catalyseur, une efficacité de traitement des polluants inférieure au seuil réglementaire.

On comprend que, si cette solution est efficace, elle est très pénalisante en terme de coût puisqu'elle nécessite d'augmenter au-delà du nécessaire la quantité de métaux précieux du catalyseur neuf pour assurer son fonctionnement correct dans son état le plus dégradé.

On a donc également proposé de compenser cette perte d'efficacité par une augmentation plus rapide de la température des gaz d'échappement dans certaines phases de fonctionnement du moteur. Cette augmentation est obtenue par dégradation du rendement du moteur (vannage, retard de l'injection principale...) ce qui, malheureusement, augmente la consommation de carburant durant ces phases.

Cette stratégie est déjà utilisée associée à des moteurs à essence. Pour les moteurs Diesel elle a, jusqu'ici été jugée non rentable en raison de l'augmentation de la consommation de carburant et de la dégradation simultanée d'autres prestations telles que les émissions d'oxydes d'azote et de particules, le bruit et la stabilité de combustion du moteur.

Pour qu'une telle stratégie devienne techniquement applicable, il est nécessaire d'optimiser à la fois la stratégie de chauffage des gaz d'échappement et celle de la mise en oeuvre dudit chauffage.

La demande de brevet US2004/000136 décrit une stratégie de chauffage rapide d'un catalyseur d'oxydation intégré dans la ligne d'échappement d'un moteur. Cette stratégie consiste à déterminer une consigne de chauffage du catalyseur, à déterminer une réduction du taux d'air en excès, en fonction de la quantité de carburant injecté, et à corriger la consigne de régulation de recirculation des gaz d'échappement à l'admission.

Le but de l'invention est de proposer une stratégie de chauffage rapide, au démarrage du véhicule, des catalyseurs d'oxydation utilisés pour dépollution des moteurs Diesel, en vue de compenser leur vieillissement sans augmenter les émissions de polluants ni dégrader les prestations dudit véhicule.

A cet effet, la présente invention a pour objet une stratégie de chauffage rapide pour compenser le vieillissement d'un catalyseur d'oxydation intégré à la ligne d'échappement d'un moteur Diesel alimenté en carburant par des injecteurs disposés dans les cylindres et en air, d'une part par un circuit d'admission comportant un papillon dont l'ouverture est commandée par un calculateur de contrôle moteur et un compresseur actionné par une turbine installée dans le conduit d'échappement, et d'autre part par un circuit de recirculation des gaz d'échappement disposé entre le conduit d'échappement et le conduit d'admission, dont l'ouverture est régulée par une vanne commandée par le calculateur de contrôle moteur.

Selon cette stratégie, lors d'une phase de démarrage du moteur, on modifie en premier lieu les consignes concernant le réglage du circuit d'air, c'est-à-dire, le débit d'air entrant dans le circuit, la pression des gaz à l'admission et le débit du circuit de recirculation des gaz d'échappement et en second lieu les consignes concernant l'injection du carburant dans les cylindres.

Selon d'autres caractéristiques avantageuses de l'invention :
- Dans un premier temps on détermine le couple débit d'air admis - retard à l'injection, sans recyclage des gaz d'échappement, optimal vis-à-vis du meilleur compromis entre la température des gaz d'échappement et l'augmentation, provoquée par cette stratégie, des émission de HC et CO, puis dans un second temps, on détermine la quantité à ajouter de gaz d'échappement recyclé suffisante pour revenir à un niveau d'émission de HC et CO normal, tout en maintenant les émissions de NOx, précédemment réduites par le retard à l'injection, à un niveau également normal.
- On pilote la pression générée par le turbocompresseur, et l'on régule la pression d'admission au moyen du papillon d'admission et la masse d'air frais admise par le moteur au moyen de la vanne de recirculation des gaz.
- Les consignes de pression d'admission, de quantité d'air admise et de pression du turbocompresseur sont telles que du vannage à l'admission a lieu et s'opère en même temps que le recyclage des gaz d'échappement.
- A la fin du mode de chauffage rapide les consignes de pression d'admission, de quantité d'air admise et de pression du turbocompresseur sont modifiées afin de provoquer l'ouverture complète du papillon d'admission et le débit d'air ainsi que le taux de gaz recyclés sont identiques à ceux du mode destiné à réduire les surémissions polluantes.
- Les consignes de débit d'air et de pression sont construites à partir de cartographies établies en fonction, d'une part du régime et de la charge du moteur et d'autre part de la température de l'eau du moteur.
- Des corrections sont apportées aux consignes de débit d'air et de pression en fonction de la pression atmosphérique et de la température d'air.
- Pour les points de fonctionnement chargés du moteur, on maintient avantageusement une pression basse, turbocompresseur ouvert. Alors que pour les points de fonctionnement peu chargés du moteur, on maintient une pression haute, turbocompresseur fermé.
- En variante, la fonction vannage à l'admission est réalisée par un papillon de commande du circuit de dérivation de l'admission qui permet d'amener tout ou partie du flux d'air entrant, directement à l'entrée du moteur.

D'autres caractéristiques et avantages de l'invention apparaîtront clairement à la lecture de la description ci-après, donnée à titre indicatif en référence aux dessins annexés dans lesquels :
- La figure 1 est un diagramme illustrant l'effet du vieillissement sur l'efficacité d'un catalyseur,
- La figure 2 montre l'architecture fonctionnelle d'un moteur Diesel intégrant l'invention,
- La figure 3 est un diagramme montrant les phases d'activation du mode de chauffage rapide et,
- La figure 4 est un diagramme montrant la zone du mode de chauffage rapide dans le fonctionnement du moteur.

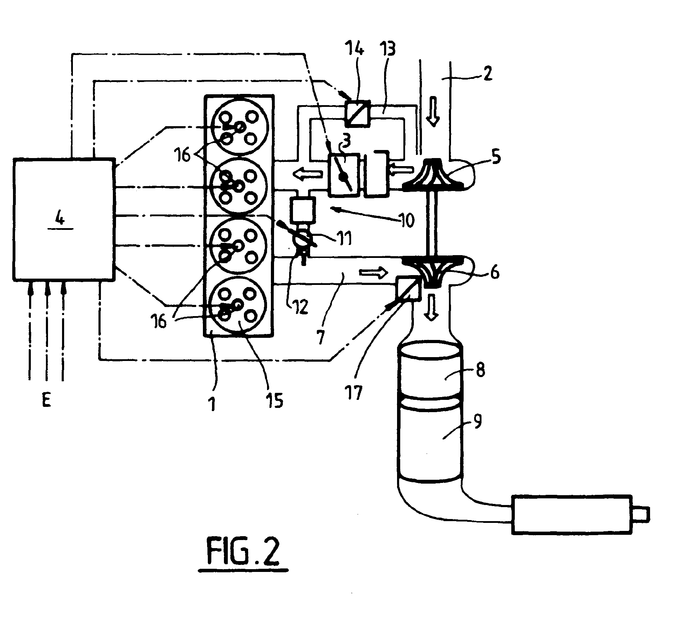

Sur la figure 2 on a représenté, de façon schématique un moteur Diesel 1 à quatre cylindres. Le circuit d'admission de ce moteur comporte un conduit 2 un papillon 3 dont l'ouverture est commandée par un dispositif motorisé connecté au calculateur de contrôle moteur 4, un compresseur 5 actionné par une turbine 6 installée dans le conduit d'échappement 7.

Le circuit d'échappement comporte, en aval de la turbine 6, un catalyseur 8 suivi d'un filtre à particules 9.

Un circuit de recirculation des gaz d'échappement 10, ci-après appelé EGR, est disposé, de la manière habituelle, entre le conduit d'échappement 7, en amont de la turbine 6, et le conduit d'admission 2, en aval du papillon 3.

Une vanne 11 commandée par un actionneur connecté au calculateur de contrôle moteur 4 est disposée dans le conduit 12 du circuit EGR 10.

On trouve encore un circuit 13 de dérivation de l'air entrant disposé entre le conduit d'admission 2, en amont du compresseur 5 et en aval du papillon 3. La vanne 14 disposée dans ce circuit est commandée par le calculateur de contrôle moteur 4 auquel elle est connectée.

Le calculateur de contrôle moteur 4 reçoit sur ses entrées E des informations de capteurs conventionnels du moteur ou des informations reconstituées : Température d'eau, température d'air ambiant, pression atmosphérique et kilométrage véhicule. En retour, il commande les différents dispositifs précités ainsi que les injecteurs 16 disposés dans les cylindres 15 et le dispositif 17 de pilotage du turbocompresseur.

Il n'est pas utile d'activer la stratégie de chauffage rapide du catalyseur à chaque démarrage du véhicule. En effet, dans certaines conditions : quand les gaz sont déjà suffisamment chauds (redémarrage, climat chaud..), accélération rapide après le démarrage ou quand le catalyseur est neuf ou peu âgé. Compte tenu de l'effet pénalisant de cette stratégie sur les performances du moteur, il est nécessaire de prendre en compté le besoin réel de l'activation.

Pour ce faire, un dispositif de surveillance et de contrôle de la stratégie de chauffage rapide est connecté au calculateur de contrôle moteur 4. Il détermine la durée d'activation du mode chauffage rapide en fonction d'un modèle d'endommagement du catalyseur et l'instant de sa mise en oeuvre en fonction des conditions de fonctionnement du moteur.

La demande de brevet de la demanderesse intitulée *"Mise en oeuvre d'un processus de chauffage rapide pour catalyseur de véhicule automobile"* et déposée le même jour que la présente demande expose un dispositif et une stratégie de ce type.

Comme cela est connu, l'augmentation de la température des gaz d'échappement est obtenue par dégradation du rendement du moteur et augmentation de la richesse du mélange air/carburant.

L'augmentation de la richesse peut être obtenue par dégradation de l'efficacité de combustion, par exemple par sous-calage de l'injection principale, c'est-à-dire par une injection plus tardive par rapport au point mort haut (PMH), par une post-injection brûlant totalement dans le moteur, par vannage à l'admission ou toute combinaison de ces moyens connus.

Ce type de contrôle moteur est déjà utilisé, par exemple dans les modes de régénération des filtres à particules. Toutefois il augmente la quantité d'oxydes d'azote et de particules contenues dans les gaz d'échappement.

Pour éviter ces inconvénients, il est donc nécessaire d'utiliser également la fonction de recyclage des gaz d'échappement (EGR) laquelle constitue un autre moyen connu d'augmenter la température des gaz d'échappement en réinjectant une partie de ceux-ci à l'admission.

Malheureusement, la mise en oeuvre de cette fonction détériore les émissions d'HC et de CO, de sorte qu'il convient de trouver le meilleur compromis dans le réglage de la quantité de gaz recyclée afin de ramener les émissions d'HC et de CO à leur niveau initial sans augmenter de nouveau les NOₓ au-delà du niveau produit lorsque le moteur fonctionne en régime nominal.

Les moyens d'augmenter la température des gaz d'échappement que l'on vient de décrire se répartissent donc entre des moyens liés au contrôle du moteur lui-même, c'est-à-dire aux modalités d'injection du carburant dans les cylindres et en des moyens de gestion du circuit d'air à l'admission et à l'échappement.

Lorsque le mode de chauffage rapide (M_{cr}) est activé, le passage entre le mode nominal et ce nouveau mode se fait (figure 3) en modifiant dans un premier temps (tₐᵢᵣ) les consignes concernant le réglage du circuit d'air, puis de la et ensuite celles concernant l'injection du carburant dans les cylindres pression d'injection (Pᵢₙⱼ), avances et débits.

Les moyens de gestion du circuit d'air doivent prendre en compte, le débit d'air entrant dans le circuit, la pression des gaz à l'admission et le débit d'EGR.

Cette boucle d'air est contrôlée au moyen du papillon d'admission 3, de la vanne EGR 11 et du turbocompresseur 5, 6 piloté par l'unité 17.

Au sein du mode de chauffage rapide, on distingue (figure 4) :
- Une zone A bien précise et relativement restreinte du champ moteur dans laquelle des consignes et un contrôle spécifiques permettant d'augmenter la température des gaz d'échappement sont appliqués.
- Une zone B de transition dans laquelle le contrôle est identique à celui de la zone A et les consignes sont celles du mode appliqué pour la réduction des surémissions polluantes.
- Une zone C dans laquelle les consignes et le contrôle sont tels que le réglage moteur est identique au mode nominal précédant le mode de chauffage rapide.

Dans les zone A et B la pression générée par le turbocompresseur 5,6 est pilotée par l'unité 17, la masse d'air frais admise par le moteur est régulée par la vanne EGR 11 et la pression d'admission est régulée par le papillon d'admission 3.

Les consignes de pression d'admission, de quantité d'air admise et de pression du turbocompresseur sont telles que dans la zone A du vannage à l'admission a lieu et s'opère en même temps que le recyclage des gaz d'échappement.

Dans la zone B, les consignes des trois paramètres précédents sont modifiées afin de provoquer l'ouverture complète du papillon d'admission 3 et le débit d'air ainsi que le taux de gaz recyclés sont identiques à ceux du mode destiné à réduire les surémissions polluantes.

Dans la zone C les consignes sont identiques à celles du mode nominal, la pression d'admission est régulée par le turbocompresseur, le papillon d'admission 3 est ouvert et la vanne EGR 11 est fermée.

Les consignes de débit d'air et de pression sont construites à partir de cartographies établies en fonction, d'une part du régime et de la charge du moteur et d'autre part de la température de l'eau du moteur. Des corrections sont ensuite apportées en fonction de la pression atmosphérique et de la température d'air.

Une fois les consignes concernant la boucle d'air déterminées, on modifie les consignes concernant l'injection de carburant dans les cylindres. Pour ce faire, les injections de carburant sont retardées afin de favoriser une montée en température des gaz d'échappement. Le schéma d'injection suivant a été retenu : une injection pilote suivie d'une injection principale et, éventuellement, d'une post-injection.

Il est également prévu de faire varier la pression dans le rail d'injection de façon spécifique.

Le calcul de ces consignes d'injection se fait sur la base de l'interpolation de cartographies fonction, d'une part du régime et de la charge du moteur et, d'autre part de la température de l'eau dans le moteur et de la température de l'air.

Au lieu d'utiliser une injection principale déphasée, il est possible d'utiliser une post-injection rapprochée, typiquement entre 15 et 30°V après le point mort haut. Cette stratégie permet d'améliorer le compromis température / émissions à la source.

La stratégie spécifique au mode de chauffage rapide consiste dans un premier temps à trouver le couple Débit d'air - déphasage de l'injection principale, sans recyclage des gaz, optimal vis-à-vis du compromis température des gaz d'échappement - surémission (HC/CO)-agrément de conduite. Puis dans un second temps, d'ajouter une quantité de gaz d'échappement suffisante pour revenir au niveau de NOx initial.

Une méthode d'optimisation de ces consignes repose sur la gestion du turbocompresseur. Pour les points de fonctionnement chargés, il est préférable de fonctionner en basse pression, turbocompresseur ouvert. En revanche, pour les points peu chargés, il est préférable de fonctionner en haute pression, turbocompresseur fermé, cela permet de limiter les émissions de CO et HC.

En variante, la fonction vannage à l'admission peut être réalisée par le papillon 14 de commande du circuit de dérivation 13 de l'admission qui permet d'amener tout ou partie du flux d'air entrant, directement à l'entrée du moteur. Dans cette configuration, le vannage en mode de chauffage rapide doit pouvoir être réalisé soit par le papillon d'admission 3 seul (papillon 14 fermé), soit par le papillon 14 de dérivation seul (papillon 3 fermé dans la zone de vannage). Dans ce dernier cas, une stratégie spécifique de contrôle des papillons est nécessaire afin d'éviter une fermeture simultanée des deux papillons lors d'une accélération.

Le choix de vanner par le papillon d'admission ou le papillon de dérivation se fait par étalonnage.

La stratégie que l'on vient de décrire permet d'élever très rapidement après le démarrage du moteur la température du catalyseur d'oxydation au niveau d'efficacité déterminé par son vieillissement et ce sans augmentation du un niveau d'émissions polluantes et sans dégradation des conditions de fonctionnement du moteur. Par conséquent, elle rend inutile la surcharge du catalyseur en métaux précieux.

## Revendications

1. Stratégie de chauffage rapide pour compenser le vieillissement d'un catalyseur (8) d'oxydation intégré à la ligne d'échappement d'un moteur Diesel (1) alimenté en carburant par les injecteurs (16) disposés dans les cylindres (15) et en air, d'une part par un circuit d'admission comportant un conduit (2) un papillon (3) dont l'ouverture est commandée par un calculateur de contrôle moteur (4) et un compresseur (5) actionné par une turbine (6) installée dans le conduit d'échappement (7), et d'autre part par un circuit de recirculation des gaz d'échappement (10), disposé entre le conduit d'échappement (7) et le conduit d'admission 2, dont l'ouverture est régulée par une vanne (11) commandée par le calculateur de contrôle moteur (4),
**caractérisé en ce que**, lors d'une phase de démarrage du moteur, on modifie en premier lieu les consignes concernant le réglage du circuit d'air, c'est-à-dire, le débit d'air entrant dans le circuit, la pression des gaz à l'admission et le débit du circuit de recirculation des gaz d'échappement (10) et en second lieu les consignes concernant l'injection du carburant dans les cylindres (15)

2. Stratégie de chauffage rapide d'un catalyseur (8) d'oxydation selon la revendication 1 ,
**caractérisé en ce que**, dans un premier temps on détermine le couple débit d'air admis - retard à l'injection, sans recyclage des gaz d'échappement, optimal vis-à-vis du meilleur compromis entre la température des gaz d'échappement et l'augmentation, provoquée par cette stratégie, des émission de HC et CO, puis dans un second temps, on détermine la quantité à ajouter de gaz d'échappement recyclé suffisante pour revenir à un niveau d'émissions de HC et de CO normal, tout en maintenant les émissions de NOx, précédemment réduites par le retard à l'injection, à un niveau également normal.

3. Stratégie de chauffage rapide d'un catalyseur (8) d'oxydation selon la revendication 2,
**caractérisé en ce que** l'on pilote la pression générée par le turbocompresseur (5,6), et que l'on régule la pression d'admission au moyen du papillon d'admission (3) et la masse d'air frais admise par le moteur au moyen de la vanne (11) de recirculation des gaz.

4. Stratégie de chauffage rapide d'un catalyseur (8) d'oxydation selon la revendication 3,
**caractérisé en ce que** les consignes de pression d'admission, de quantité d'air admise et de pression du turbocompresseur sont telles que du vannage à l'admission a lieu et s'opère en même temps que le recyclage des gaz d'échappement.

5. Stratégie de chauffage rapide d'un catalyseur (8) d'oxydation selon la revendication 4,
**caractérisé en ce que**, à la fin du mode de chauffage rapide les consignes de pression d'admission, de quantité d'air admise et de pression du turbocompresseur sont modifiées afin de provoquer l'ouverture complète du papillon d'admission (3) et le débit d'air ainsi que le taux de gaz recyclés sont identiques à ceux du mode destiné à réduire les surémissions polluantes.

6. Stratégie de chauffage rapide d'un catalyseur (8) d'oxydation selon la revendication 5,
**caractérisé en ce que** les consignes de débit d'air et de pression sont construites à partir de cartographies établies en fonction, d'une part du régime et de la charge du moteur et d'autre part de la température de l'eau du moteur.

7. Stratégie de chauffage rapide d'un catalyseur (8) d'oxydation selon la revendication 6,
**caractérisé en ce que** des corrections sont apportées aux consignes de débit d'air et de pression en fonction de la pression atmosphérique et de la température d'air.

8. Stratégie de chauffage rapide d'un catalyseur (8) d'oxydation selon l'une des revendications précédentes,
**caractérisé en ce que** pour les points de fonctionnement chargés du moteur, on maintient une pression basse, turbocompresseur ouvert.

9. Stratégie de chauffage rapide d'un catalyseur (8) d'oxydation selon l'une des revendications précédentes,
**caractérisé en ce que** pour les points de fonctionnement peu chargés du moteur, on maintient une pression haute, turbocompresseur fermé.

10. Stratégie de chauffage rapide d'un catalyseur (8) d'oxydation selon l'une des revendications précédentes,
**caractérisé en ce que** la fonction vannage à l'admission est réalisée par un papillon (14) de commande du circuit de dérivation (13) de l'admission qui permet d'amener tout ou partie du flux d'air entrant, directement à l'entrée du moteur.

## Claims

1. Quick-heating strategy to compensate for the aging of an oxidation catalyst (8) integrated in the exhaust line of a diesel engine (1) supplied with fuel by the injectors (16) disposed in the cylinders (15) and with air, on the one hand by an admission circuit comprising a duct (2), a throttle valve (3), the opening of which is controlled by an engine control unit (4), and a compressor (5), actuated by a turbine (6) installed in the exhaust duct (7), and on the other hand by an exhaust gas recirculation circuit (10), disposed between the exhaust duct (7) and the admission duct (2), the opening of which is regulated by valve (11) controlled by the engine control unit (4),
**characterized in that** on a start-up phase of the engine, firstly the setpoints concerning the regulating of the air circuit are modified, i.e. the flow of air entering into the circuit, the pressure of the gases at admission and the flow of the exhaust gas recirculation circuit (10), and secondly the setpoints concerning the injection of the fuel in the cylinders (15).

2. Quick-heating strategy of an oxidation catalyst (8) according to Claim 1,
**characterized in that** firstly the admitted air flow torque is determined - injection delay, without recycling of the exhaust gases, optimal with respect to the best compromise between the temperature of the exhaust gases and the increase, caused by this strategy, of the HC and CO emissions, then secondly the sufficient quantity to be added of recycled exhaust gas is determined for returning to a normal level of HC and CO emissions, whilst maintaining the NOx emissions, previously reduced by the injection delay, to a likewise normal level.

3. Quick-heating strategy of an oxidation catalyst (8) according to Claim 2,
**characterized in that** the pressure generated by the turbocompressor (5, 6) is guided, and that the admission pressure is regulated by means of the admission throttle valve (3) and the mass of fresh air admitted by the engine by means of the valve (11) for recirculation of the gases.

4. Quick-heating strategy of an oxidation catalyst (8) according to Claim 3,
**characterized in that** the setpoints of admission pressure, admitted air quantity and pressure of the turbocompressor are such that throttling on admission takes place and operates at the same time as the recycling of the exhaust gases.

5. Quick-heating strategy of an oxidation catalyst (8) according to Claim 4,
**characterized in that**, at the end of the quick-heating mode, the setpoints of admission pressure, admitted air quantity and pressure of the turbocompressor are modified so as to cause the complete opening of the admission throttle valve (3), and the flow of air and also the rate of recycled gases are identical to those of the mode intended to reduce the pollutant excess emissions.

6. Quick-heating strategy of an oxidation catalyst (8) according to Claim 5,
**characterized in that**
the setpoints of air flow and pressure are constructed from cartographies established as a function, on the one hand, of the speed and of the load of the engine, and on the other hand of the temperature of the water of the engine.

7. Quick-heating strategy of an oxidation catalyst (8) according to Claim 6,
**characterized in that**
corrections are made to the setpoints of air flow and of pressure as a function of the atmospheric pressure and of the air temperature.

8. Quick-heating strategy of an oxidation catalyst (8) according to one of the preceding claims,
**characterized in that** for the loaded operating points of the engine, a low pressure is maintained with the turbocompressor open.

9. Quick-heating strategy of an oxidation catalyst (8) according to one of the preceding claims,
**characterized in that** for the operating points of the engine which are scarcely loaded, a high pressure is maintained with the turbocompressor closed.

10. Quick-heating strategy of an oxidation catalyst (8) according to one of the preceding claims,
**characterized in that** the function of throttling on admission is realized by a control throttle valve (14) of the branch circuit (13) of admission, which allows all or part of the flux of entering air to be brought directly to the inlet of the engine.

## Patentansprüche

1. Strategie zum schnellen Aufheizen, um das Altern eines Oxidationskatalysators (8) zu kompensieren, der in die Abgasleitung eines Dieselmotors (1) eingebaut ist, der von Einspritzern (16) mit Kraftstoff versorgt wird, die in den Zylindern (15) angeordnet sind, und mit Luft, einerseits durch einen Einlasskreislauf, der eine Leitung (2) und ein Drosselventil (3) aufweist, dessen Öffnen von einem Motorsteuerrechner (4) gesteuert wird, und einem Kompressor (5), der von einer Turbine (6) betätigt wird, die in der Abgasleitung (7) installiert ist, und andererseits durch einen Rezirkulationskreislauf der Abgase (10), der zwischen der Abgasleitung (7) und der Einlassleitung (2) angeordnet ist, dessen Öffnen von einem Schieber (11) geregelt wird, der von dem Motorsteuerrechner (4) gesteuert wird,
**dadurch gekennzeichnet, dass** man bei einer Anlassphase des Motors zuerst die Sollwerte ändert, die die Einstellung des Luftkreislaufs betreffen, das heißt den Luftdurchsatz, der in den Kreislauf eintritt, den Druck der Gase am Einlass und den Durchsatz des Rezirkulationskreislaufs der Abgase (10) und danach die Sollwerte, die die Einspritzung des Kraftstoffs in die Zylinder (15) betreffen.

2. Strategie zum schnellen Aufheizen eines Oxidationskatalysators (8) nach Anspruch 1,
**dadurch gekennzeichnet, dass** man zuerst das Paar Einlassluftdurchsatz - Einspritzverzögerung ohne Recycling der Abgase, im Hinblick auf den besten Kompromiss zwischen der Temperatur der Abgase und der Erhöhung der HC- und CO-Emissionen, die durch diese Strategie verursacht wird, optimal bestimmt, und dann die ausreichende Menge an recycelten Abgasen bestimmt, die hinzuzufügen ist, um zu einem normalen HC- und CO-Emissionsniveau zurückzukehren und gleichzeitig die NOx-Emissionen, die zuvor durch die Einspritzverzögerung reduziert wurden, ebenfalls auf einem normalen Niveau zu halten.

3. Strategie zum schnellen Aufheizen eines Oxidationskatalysators (8) nach Anspruch 2,
**dadurch gekennzeichnet, dass** man den Druck, der von dem Turbolader (5, 6) erzeugt wird, steuert, und dass man den Einlassdruck mittels des Einlassdrosselventils (3) und die von dem Motor eingelassene Frischluftmasse mittels des Rezirkulationsschiebers (11) der Gase regelt.

4. Strategie zum schnellen Aufheizen eines Oxidationskatalysators (8) nach Anspruch 3,
**dadurch gekennzeichnet, dass** die Sollwerte des Einlassdrucks der eingelassenen Luftmenge und des Drucks des Turboladers derart sind, dass beim Einlassen Schieberbetätigung stattfindet und gleichzeitig mit dem Recycling der Abgase abläuft.

5. Strategie zum schnellen Aufheizen eines Oxidationskatalysators (8) nach Anspruch 4,
**dadurch gekennzeichnet, dass** man am Ende des schnellen Aufheizbetriebs die Sollwerte des Einlassdrucks, der eingelassenen Luftmenge und des Drucks des Turboladers ändert, um das komplette Öffnen des Einlassdrosselventils (3) zu veranlassen, und dass der Luftdurchsatz sowie die Rate an recyceltem Gas gleich sind wie die der Betriebsart, die dazu bestimmt ist, verschmutzende Mehremissionen zu verringern.

6. Strategie zum schnellen Aufheizen eines Oxidationskatalysators (8) nach Anspruch 5,
**dadurch gekennzeichnet, dass** die Sollwerte des Luftdurchsatzes und des Drucks jeweils ausgehend von Kartographien zusammengestellt werden, die einerseits in Abhängigkeit von der Drehzahl und der Last des Motors und andererseits von der Wassertemperatur des Motors erstellt werden.

7. Strategie zum schnellen Aufheizen eines Oxidationskatalysators (8) nach Anspruch 6,
**dadurch gekennzeichnet, dass** an den Luftdurchsatz- und Drucksollwerten Korrekturen in Abhängigkeit von dem Luftdruck und der Lufttemperatur vorgenommen werden.

8. Strategie zum schnellen Aufheizen eines Oxidationskatalysators (8) nach einem der vorhergehenden Ansprüche,
**dadurch gekennzeichnet, dass** man für die belasteten Betriebspunkte des Motors einen niedrigen Druck, Turbolader offen, aufrechterhält.

9. Strategie zum schnellen Aufheizen eines Oxidationskatalysators (8) nach einem der vorhergehenden Ansprüche,
**dadurch gekennzeichnet, dass** man für die wenig belasteten Betriebspunkte des Motors einen hohen Druck, Turbolader geschlossen, aufrechterhält.

10. Strategie zum schnellen Aufheizen eines Oxidationskatalysators (8) nach einem der vorhergehenden Ansprüche,
**dadurch gekennzeichnet, dass** die Schieberbetätigungsfunktion am Einlass von einem Drosselventil (14) zum Steuern des Abzweigkreislaufs (13) des Einlasses ausgeführt wird, das es erlaubt, einen Teil oder den ganzen eintretenden Luftstrom direkt zum Motoreinlass zu führen.
